# EUROPEAN PATENT SPECIFICATION

(11) **EP 2 691 921 B1**
(45) Date of publication and mention of the grant of the patent: **16.01.2019**
(21) Application number: 11862443.6
(22) Date of filing: 30.03.2011
(51) Int. Cl.: G06K 19/00, H01Q 1/00, H01Q 3/01, G06K 19/073, H01Q 1/22

(54) **RADIO-FREQUENCY IDENTIFICATION TAG WITH ACTIVATION PORTION**
RFID-ETIKETT MIT AKTIVIERUNGSTEIL
ÉTIQUETTE D'IDENTIFICATION PAR RADIOFRÉQUENCE COMPRENANT UNE PARTIE D'ACTIVATION

(43) Date of publication of application: 05.02.2014
(73) Proprietor: Smartrac Investment B.V., 1077 XX Amsterdam (NL)
(72) Inventor: VIRTANEN, Juhani, FI-33100 Tampere (FI); VATTULAINEN, Juha, FI-36200 Kangasala (FI)
(74) Representative: Berggren Oy, Tampere
(86) International application number: PCT/FI2011/050271
(87) International publication number: WO 2012/131143

(56) References cited:
- WO-A1-2008/112578
- JP-A- 2003 266 589
- JP-A- 2010 262 538
- US-A1- 2002 014 992
- US-A1- 2006 091 225
- US-A1- 2007 210 173

## Description

### Field

The present invention relates to a radio-frequency identification tag with an activation portion.

### Background

A radio frequency identification (RFID) tag is a tag provided with a transponder comprising an antenna and an integrated circuit attached to the antenna. RFID tags do not necessarily have an internal power supply or battery of their own but the power required to energize the tag is obtained from the electromagnetic field created by the reader device used to interrogate the tag. Such tags relying purely on backscatter communication are referred to as passive tags. RFID tags can be used in various environments where identification is needed.

RFID transponders, especially passive RFID transponders, are known to have problems with reduced reading ranges and/or detuning when attached to certain types of surfaces. The functioning of the transponders can be disturbed because packaging materials or contents of packages cause detuning or attenuation, and consequently the transponder does not work properly. Furthermore, different retail products can have different dielectric characteristics and therefore different effect on electrical components. For example, on conductive metal surfaces or on some other surfaces which have high RF losses, the transponders may not work at all. In some cases the problem can be solved by manufacturing a suitably pre-tuned transponder for each application, but this is naturally an expensive way to address the problem. It is also possible to make the label comprising the transponder thicker and/or equipped with some RF isolating/shielding material layers to reduce the interference from the target surface. However, this typically complicates printing of labels with RFID transponders and increases the price of the labels due to the higher cost of the special materials.

One further known option is to increase the distance of the transponder, specifically the distance of the antenna from the surface by manually supporting the tag in a position where the antenna is located a distance away from the tagged surface. Labels are known which can be attached only from one end and then supported to stick or flag out from the surface. These involve typically special foldings of the label in order to support the antenna or transponder away from the tagged surface. Such foldings need to be arranged manually and may require perforations or other preparations on the tag. EP1883058 discloses a label comprising a first area, a second area, and an area between the first area and the second area, said area being folded or foldable to form a flap which comprises an antenna and, when folded, protrudes from the plane of the first and the second area.

US2002/0014992 A1 discloses a patch antenna for use in radio communication and made from shape memory materials that can change the antenna configuration to have different apertures for operations at different frequencies. The temperature of the antenna controls the frequency at which the antenna radiates. The antenna is designed so that at a temperature below an activation temperature it consists of a single large flat radiating patch antenna that radiates at a lowest frequency. As the temperature is increased to the activation temperature the shape memory material components are deformed from their base flat shape, contacts with the adjacent antenna components are broken and the antenna radiate at a higher frequency.

### Brief description

The present invention relates to a radio-frequency identification tag according to claim 1, a method of applying a radio-frequency identification tag according to claim 9, a method for manufacturing a radio-frequency identification tag according to claim 10 and a product comprising a radio-frequency identification tag according to claim 11.

According to some embodiments, the activation portion comprises heat-shrinkable material, such as heat-shrinkable plastic film, or at least two attached sub-portions having different thermal expansion coefficients.

According to another embodiment, the shape change causes at least a portion of the antenna structure to elevate from a conducting surface of an article on which the identification tag is attached or from a conducting surface of the identification tag.

According to a still further embodiment, the shape change material is arranged such that the activation causes at least a portion of the activation portion to curve and the shape antenna structure to become rotated or coiled.

The invention and various embodiments of the invention provide several advantages, which will become apparent from the detailed description below.

### List of drawings

Embodiments of the present invention are described below, by way of example only, with reference to the accompanying drawings, in which
Figure 1 is a schematic top view of an example radio-frequency identification tag;
Figures 2a and 2b are schematic side views of an example radio-frequency identification tag;
Figure 3 illustrates a top view of an example radio-frequency identification tag;
Figures 4a to 4c are schematic side views of example radio-frequency identification tags;
Figures 5a and 5b illustrate some examples of radio-frequency identification tags attached to articles;
Figures 6a, 6b, 7a, and 7b illustrate some examples of antenna structure form changes;
Figure 8 illustrates some further examples of form changes; and
Figure 9 illustrates an apparatus for producing electronic components according to an embodiment.

### Description of embodiments

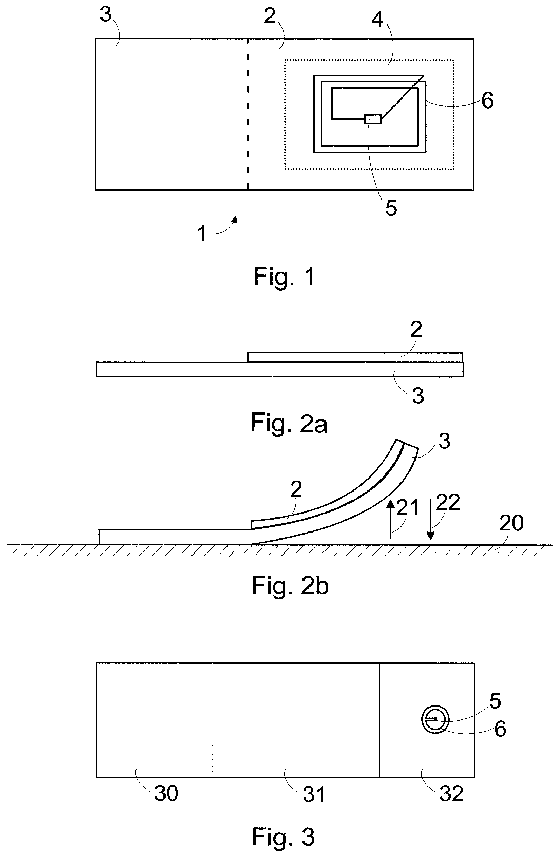

Figure 1 illustrates a radio-frequency identification (RFID) tag 1 with a transponder 4. The transponder 4 comprises at least an antenna structure 6 and an integrated circuit (IC) 5 coupled with the antenna structure. The antenna may be of aluminum, copper, silver, conductive polymeric material, or another suitable conductive material. The IC 5 may be connected to the antenna structure 6 directly or via a module with required electrical connections. The IC 5 may comprise an analogue RF interface block with a modulator and demodulator, digital control logic, and a memory, such as electrically erasable programmable read-only memory (EEPROM) storing at least identification data. The RF interface block may comprise a rectifier providing supply voltage.

The tag 1 further comprises an activation portion 2 for at least part of the transponder 4. In the example of Figure 1, the activation portion comprises the transponder 4. The activation portion is at least partly of shape change material that may be activated to undergo a shape change, causing one or more changes to the orientation of at least a portion of the antenna structure 6. The orientation change is to be understood broadly, to cover also such partial orientation changes causing the form of the antenna to change e.g. from planar form to a curved form, even if the orientation of the entire antenna structure would not substantially change. The shape change may be of substantially permanent nature or only temporary, depending on shape change material and the desired behavior of the tag. It is to be appreciated that in many cases the orientation of the entire transponder 4 is changed, but this needs not to be the case. Further, in some example variations the activation portion 2 and the shape change material is separate from the transponder/antenna structure but still causes change of the orientation of the antenna structure when activated.

Thus, the radio connectivity properties of the tag 1 may be changed by activating the shape change material. This enables to adapt the directivity and/or reading distance of the tag, for example. The activation may be made during manufacturing or later e.g. at desired point of a logistics chain. When the tags remain planar during the transportation, they are less likely to be damaged, and they will also need less space. Thus, it becomes possible to reduce e.g. ruptures as for tags in which the transponder is loose throughout the logistics chain. No mechanical/manual involvement is required for the activating the tag, since the shape change material may be activated by exposing the tag to an appropriate activator, such as activation temperature. As compared to systems in which the antenna portion is manually departed e.g. by folding during attachment of the tag, it is easier to provide automated system by applying the present features. The RFID tag 1 can be manufactured substantially as a planar and dry product (without adhesive). Planarity is important for roll-to-roll type web manufacturing processes and production and storaging of dry products is easier as compared to that of non-planar and/or "wet" products. Cost-effective materials may be applied in the tag 1 with the activation portion 2. The tag may be arranged to have a substantially rigid structure that provides more stable tag shape than tags in which the antenna is folded to form a flap, for example. There is a large number of available use cases in which the present features may be applied, some of which are further illustrated below.

In some embodiments, the activation portion 2 and the shape change material is provided by at least two different attached materials, which may form sub-portions or layers of the activation portion 2 and have different thermal expansion coefficients. These materials may be metal layers, for example. The shape change may result from interaction between these different materials. When subjected to changing temperature, so-called bi-metallic effect may occur, causing change of orientation of at least a portion of the antenna structure by the temperature change. The shape change may thus bend or curve the antenna structure. The shape change material may be arranged at least partly by the antenna structure 6. For example, the antenna structure or a part thereof could be bi-metallic arranged to cause desired shape change when subjected to designed temperature area.

In some embodiments, shrinkable material is applied as the shape change material, causing a pull action when activated. There are various heat-shrinkable materials, which may be applied as the shape change material. In some embodiments, the activation portion 2 comprises heat-shrinkable material (or for some applications heat-expansible material may be applied) and the shape change is activated by increased temperature. For example, hot air nozzle or infrared heating may be applied in a packaging system to activate the RFID tag connected to the article. By selecting a material shaping form in suitably low temperature, the permanent form shaping can take place in temperatures low enough not to cause any harm to the components of the transponder 4. It becomes possible to perform the application of the RFID tag quickly and easily and to achieve high application (tagging) speeds. Various types of commercially available heat-shrinkable plastics are applicable for many tagging applications.

However, it is to be appreciated that various other plastic and nonplastic materials, causing predictable shape change when activated by a trigger, may be applied as the shape change material. For example, the shape change material could be sensitive to and activated by ultraviolet light or some other electromagnetic radiation. In one embodiment, shape-memory polymers are applied as the shape change material. Shape-memory polymers refer generally to polymers specifically programmed to go from a predefined shape to another in response to trigger(s) such as temperature, light or magnetic field. Such shape-memory polymers may have a first temporary shape and a second permanent state. However, the shape-memory polymers may be able to change their shape multiple times, and the shape change material may include two or more types of polymers with distinct melting points. Further, the bimetallic effect may be reversible. For example, a portion of the tag is arranged to remain up only during the time that it is heated. The portion of the tag could be lifted up by heat to become readable and without heat to drop down to unreadable state.

The activation portion 2, e.g. the position, material(s), and thickness(es) of the material(s) thereof, may be designed and prepared in various ways on the basis of the desired antenna orientation change. There may be one or more shape change portions in a tag. For example, instead of a unitary shape change material film, there may be a set of shrinking material blocks or dots causing the desired shrinking action.

The tag 1 may further comprise a support portion 3 for supporting at least a part of the transponder. For example, polyester (PET) may be applied in the support portion and substrate. However, it will be appreciated that various other materials may be used, such as paper or board. It is to be noted that the support portion 3 may extend to the activation portion 2. For example, the support portion 3 may be a substrate on which the shape change material is added to form the activation portion 2. In one example variation, shape change material is included in the support portion 3 or substrate, at least in a portion desired to cause the antenna orientation change.

It is to be appreciated that the tag 1 may comprise also other portions and the portions of Figure 1 may have further purposes. For example, the tag 1 may comprise a securing portion formed by or attached to the support portion 3 for securing the identification tag to an article. Further, it will be appreciated that the elements 2, 3, 4 of the tag 1, such as the antenna structure 6, may take various forms and positions to meet the requirements of an end application and desired performance of the transponder in question. For example, the antenna structure may be located at the activation portion or a further portion affected by the activation of the shape change material in the activation portion 2.

The antenna structure may be formed on the activation portion 2 or a further substrate by etching, printing, electrolysis, or plating, for example. In some cases the shape change material is added on top of the antenna structure, e.g. by lamination.

In some other embodiments, the IC 5 is capacitively and/or inductively coupled to the antenna structure. For example, the tag 1 may comprise a secondary booster antenna without a galvanic connection to the IC 5 on the activation portion. The tag structure may be such that the orientation of such booster antenna may be affected by activation of the shape change material.

### Movement of antenna

According to some embodiments, the activation portion 2 is applied to change the orientation of the antenna structure by diverging or approaching at least a portion of the antenna structure 6 from or to a surface, such as a conductive or otherwise disturbing surface of the tag 1 or a tagged product.

For example, Figure 2a illustrates a side view of the tag 1 with the antenna structure 6 (not shown) on top of the activation portion 2, in the activation portion 2, or between the activation portion 2 and the support portion 3 in its initial orientation. In this example tag, the shape change material 2 is added on a portion of the substrate 3. For example, the shape change material 2 may be laminated or otherwise attached to the substrate 3.

As illustrated in Figure 2b, the tag 1 may be activated 21 by the shape change causing elevation of the antenna structure from an underlying conductive, interfering surface 20, resulting in substantially increased reading distance. For example, the antenna structure 6 may be arranged to initially (Figure 2a) contact the conductive surface 20, and the elevation of the antenna structure enables the wireless reading of the transponder.

It is very often desirable to have the tag in planar form e.g. to simplify attachment of the tag. The present features enable to have flat planar RFID tags e.g. during manufacturing and delivery, and improve the readability of the tag by lifting up the antenna structure after attaching the tag to the tagged product.

By applying at least some features of the present invention, the RFID tag may be activated for wireless scanning (interrogation) at desired point of the logistics chain. However, it is to be noted that the activation and the shape change may be unintentional; only those RFID tags that respond to a scanning signal may be detected to have experienced a specific condition causing the shape change. Therefore, for example, heat may be used to raise the antenna portions of the tags to make them interrogatable with readers.

By selecting shape change material with suitable activation properties, this feature may be applied to scan for and detect tagged products that have suffered a specific temperature above or below some given design temperature (or some other activation trigger condition). For example, in cold chain logistics, products with tags that respond to scanning can be easily and quickly detected to have undergone some undesirable (or desirable) temperature. Further, in some cases the tags may be arranged to visually indicate that the temperature has been over some specific temperature because the tag is up.

In some other embodiments, the activation portion 2 and the activation of the shape change material is applied for deactivating the tag 1. For example, the shape change may cause the antenna structure 6 to contact 22 the conductive surface 20 to prevent wireless reading of the tag 1.

Figure 3 illustrates a further example of a tag comprising an activation portion 31 with the shape change material and two substantially non-bending portions 30 and 32. The first portion 30 may be a securing portion to attach the tag to the article and the second portion 32 may comprise the transponder 4. This embodiment has the advantage that the transponder 4 may be protected from bending.

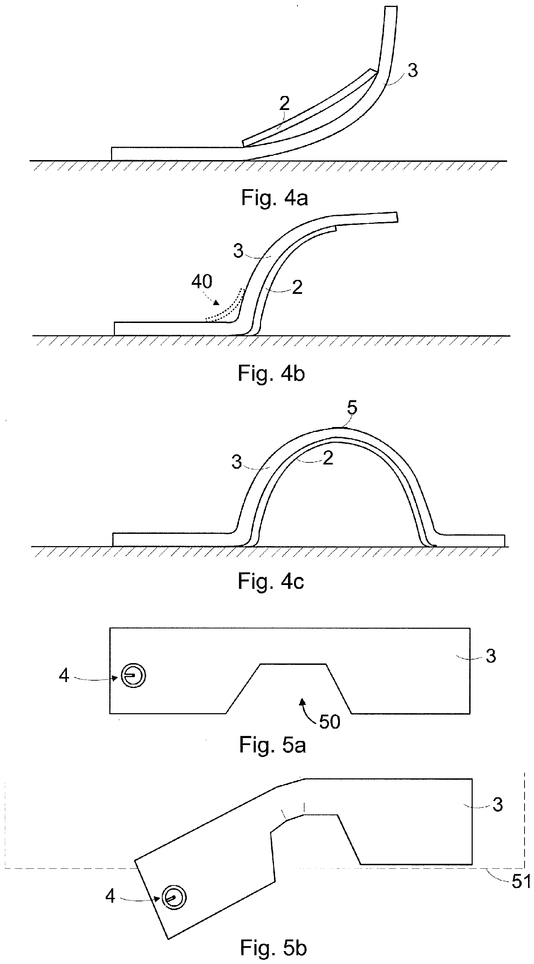

Figures 4a to 4c provide some further examples on tags wherein the shape change material has been activated. The tag in Figures 4a and 4b may have the structure illustrated in Figure 3. In the example of Figure 4c, the transponder 4 may locate in the middle of the raised activation portion, for example.

In a still further example, the shape changing material causing tightening, such as shrinking film, may be attached only at the ends of the tag. When activated e.g. by heating, a portion of the tag not attached to the tagged product may raise and change into a bow form due to the pull caused by the shrinking film. This may provide further pronounced curving and allow to achieve close or even over 90 degree angles.

The activation portion 2 may contain one or more areas without the shape change material, in order to achieve more complicated shape changes. There may be shape change material in various portions of the tag, causing further orientation change. For example, with reference to Figure 4b, there may be shrinking material 40 on top of the support portion. This further shrinking material may be arranged to form shape first such that the portion comprising the other shape change material 2 is raised from substantially planar level. The other shape change material 2 may be arranged to activate e.g. after the shrinking material 40 and cause further desired orientation change. Thus, it will be appreciated that it is possible to arrange many types and stages of orientation and shape changes by applying suitably selected, positioned and activatable shape change material portions. Further, it is to be noted that the shape change material may be arranged and activated for further purposes. For example, the activation of the shape change material may cause or facilitate attachment to the product.

In some embodiments the support portion 3, or some other portion of the tag 1, is provided by an aperture or specific property, such as thinner sub-portion, which affects the orientation change.

Figures 5a and 5b illustrate a top view of an example tag comprising an aperture 50, e.g. in the substrate 3. Shape change material may be added on top of the substrate, also on top of the aperture 50 (not shown). The right side of the tag may be attached to an article and the transponder 4 is attached on the left side of the tag. For example, the tag may be attached by right side of the tag on a closing cover of a package such that the tag in its non-activated position of Figure 5a is hidden when the cover is closed. When the shape change material is activated, the left side of the tag comprising the transponder 4 may bend laterally, as illustrated in Figure 5b. For example, the tag may be activated to protrude out of a side 51 of the product and/or from a slot and/or opening in the product.

In some example embodiments, the orientation of at least a portion of the tag (comprising typically the entire transponder 4) is changed at desired point of the logistics chain to make the removal the tag easier. By elevating 21 the tag, or by laterally protruding the tag out of the product as illustrated in Figure 5b, automatic ripping of the tag from the product may be made easier.

In a still further example embodiment, the structure of the antenna may be such that there is a need to diverge (or approach) two portions of the antenna to enable or disable remote reading of the tag. For example, the tag may have two surfaces that both comprise an antenna or part of an antenna. If these two parts of the antenna are close each other, the tag might be unreadable or the reading distance could be very short. Then, when activated e.g. by heat, the two parts come to a certain distance from each other and the reading distance increases. These can be two parts of the same antenna or two different antennas, wherein the other one of these could be electromagnetically coupled to form a booster antenna functioning as a secondary antenna for the transponder 4.

RFID tags with the presently disclosed activation portion may be applied for a wide variety of applications and products. As already indicated above, particular advantages are available when manufacturing RFID tags for metal surfaces or other difficult applications where the tagged surface can interfere with the transponder. Some examples of such applications include bottles, pharmaceutical packages, food packages, tyres, packages for electronics, items sensitive for elevated temperatures, sheet-like materials stocked in piles, etc.

### Change of antenna form

In some embodiments, the activation portion 2 is applied for controlling change of form of the RFID tag antenna structure 6. For example, also referring to Figures 4a to 4c, the form of the antenna structure arranged in the raised portion may change as a result of the activation of the shape change material.

In a further embodiment, the present features are applied to cause the form of the antenna structure to change from substantially two-dimensional form to three-dimensional (3D) form when the shape change material is activated. This can be accomplished by suitable combination of the tag structure and the shape change material.

When activated e.g. by heat, the activation portion 2 may be arranged to curve or bend in one direction to change the shape of the antenna structure in several dimensions. A portion of the tag comprising the antenna structure may thus become rotated, twisted or coiled around some axis, and may change to a spiral or helix form. For example, the raised portion of Figure 4b may be provided with further shape change material causing curving of the raised portion. The shape change may be arranged only to a portion of the tag comprising (at least a portion) of the antenna structure. The shape change material may be positioned such that the securing portion 30 remains in its initial form during the activation and the attachment to the product is not impaired.

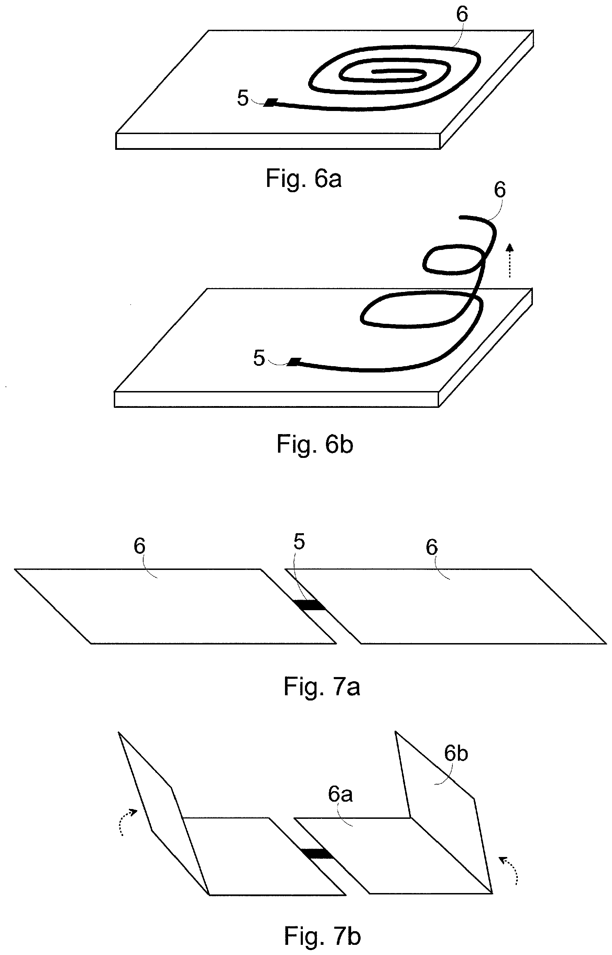

A further example is provided in Figures 6a and 6b, in which the antenna structure 6 is pre-cut to form a spiral form and initially (Fig. 6a) substantially of planar shape on top of a substrate. When the shape change material is activated, portions of the antenna structure are raised and a 3D antenna is formed (Fig. 6b). The antenna structure may be a bi-metallic strip with a predefined width. As this strip is heated, it starts to bend upwards and the form of the antenna structure changes to a helix or spiral form.

A still further example is provided in Figures 7a and 7b, in which a dipole type antenna structure 6 on both sides of the IC 5 is initially (Fig. 7a) substantially of planar shape. When the shape change material is activated, at least one portion 6a of the antenna structure is raised and the antenna shape changed (Fig. 7b).

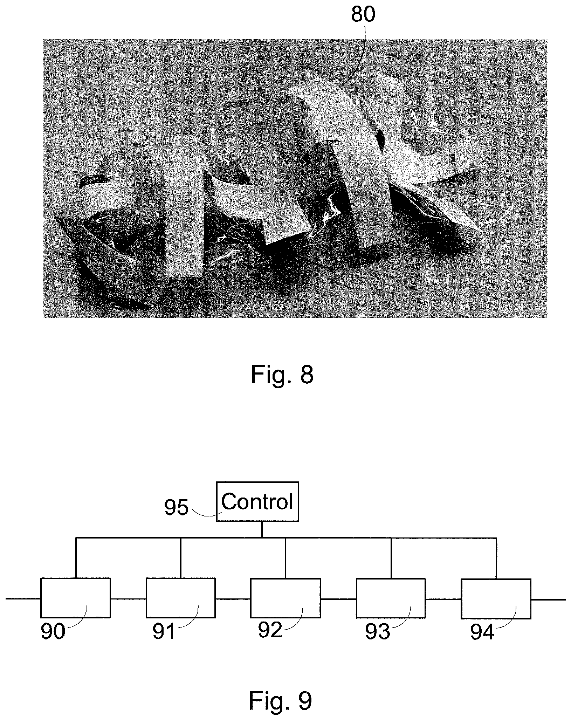

Hence, there are many different options for controlling antenna properties and directivity by applying the activatable shape change material in the RFID tag. Figure 8 illustrates some further examples of various form changes that may be achieved by suitable activation of shrinking plastic film 80.

According to a further example embodiment, a mould may be applied to control the shape change of the antenna structure. After the shape change has occurred and the antenna structure has achieved the desired antenna form, the mold may be removed.

The RFID tag 1 may be an RFID inlay, which term is often used to refer to core elements of an RFID tag with all the electric RFID functionalities available. Such inlay is usually provided by an RFID supplier to a customer. Further layers may be added to the inlay structure before end use application e.g. by printing, if required for the application in question. It will be appreciated that the shape and size of the RFID tag presented in the examples of this application may be varied in many ways, according to the end use application.

The manufacturing of RFID tags applying at least some of above-illustrated embodiments may be arranged in various ways. For example, with reference to the simplified Figure 9, such a production apparatus may comprise a unit or an element for each or at least some of the following production stages: input 90, e.g. of a web from a roll, of input material comprising a conducting antenna pattern 6 arranged on a substrate 20 and/or tamper loop 30 (typically from an etching or printing process), attachment 91 of the integrated circuit 5 on a pad area of the antenna structure 6 e.g. by an anisotropic adhesive, integrated circuit ponding 92 by heat and pressure, addition 93 of shape change material layer 21, and cutting 94 of RFID tags from the web. For example, a heat shrinking foil or material may be laminated or otherwise attached in stage 93 on the tag structure.

It is to be noted that one or more of such units may be arranged to perform one or more sub-steps related to the production stage by the unit. It will be appreciated that Figure 9 illustrates only one example and various modifications and additions may be made to these stages. For example, between stages 91 and 93 various further layers, such as plastic, paper, or cardboard cover/protective layers may be attached to the RFID tags, and texts and graphics may be printed.

In one embodiment, a roll-to-roll process is applied. Thus, an apparatus for a roll-to-roll electronic thin-film component manufacturing process system may comprise a web of input film obtained from a first rotated roll and a web of output film rolled on a second rotated roll, which includes RFID tags as illustrated in any of the Figures 1 to 6, for instance.

The apparatus configured for at least some of the above-illustrated manufacturing steps is controlled by at least one computer-based control block, control unit, or controller, as illustrated by block 95 in Figure 9. Such a controller may be implemented by a computer program executed in a processor of the apparatus. The computer program may comprise code for causing the apparatus to control at least some of the stages illustrated above. The computer program may be stored in a computer program storage medium, such as an internal memory of the apparatus or an external memory connectable to the apparatus. A specific hardware unit, which may embody software-controlled features, in one embodiment, controls at least some of the steps for manufacturing electronic thin-film components according to embodiments.

It will be obvious to a person skilled in the art that, as technology advances, the inventive concept can be implemented in various ways. The invention and its embodiments are not limited to the examples described above but may vary within the scope of the claims. The features of the embodiments described herein may be combined in all possible combinations of methods, apparatuses, and products. Single features of different embodiments may be combined to provide other embodiments.

## Claims

1. A radio-frequency identification tag (1) for interfering surfaces with a transponder, wherein the transponder (4) comprises at least an antenna structure (6) and an integrated circuit (5) coupled with the antenna structure (6), wherein the tag (1) comprises an activation portion (2),
**characterized in that** the activation portion (2) is at least partly of shape change material that may be activated to undergo a shape change for causing changed orientation of at least a portion of the tag (1) comprising the antenna structure (6).

2. The identification tag of claim 1, wherein the activation portion comprises at least two attached sub-portions having different thermal expansion coefficients, and the activation portion (2) is bendable by changing temperature.

3. The identification tag of claim 1 or 2, wherein the activation portion (2) comprises heat-shrinkable material.

4. The identification tag of claim 3, wherein at least the activation portion (2) comprises heat-shrinkable plastic film.

5. The identification tag of any preceding claim, wherein the shape change material is laminated or adhered onto the at least portion of the transponder (4).

6. The identification tag of any preceding claim, wherein the shape change material is included in or added on a support portion supporting the transponder.

7. The identification tag of claim 1, wherein the identification tag (1) comprises at least two surfaces, each comprising an antenna structure (6) or part of the antenna structure (6), and
the distance between the surfaces is arranged to increase in response to the activation of the shape change material to increase reading distance.

8. The identification tag of any preceding claim, wherein the shape change material is arranged such that the activation causes at least a portion of the activation portion (2) to curve and the shape antenna structure (6) to become rotated or coiled.

9. A method of applying the radio-frequency identification tag of any preceding claim, wherein the shape change material is activated to undergo the shape change and activate or deactivate the identification tag (1).

10. A method for manufacturing a radio-frequency identification tag (1) for interfering surfaces, comprising:
providing input material comprising a substrate (3) and an antenna structure (6) on the substrate (3),
attaching an integrated circuit (5) on a pad area of the antenna structure (6), and
adding shape change material on an activation portion (2) of the tag (1), wherein the shape change material can be activated to undergo a shape change of substantially permanent nature for causing changed orientation of at least a portion of the tag comprising the antenna structure (6).

11. A product comprising a radio-frequency identification tag according to claim 1-8, wherein the product comprises an interfering surface (20) and wherein the tag (1) is arranged on the surface (20).

12. The product of claim 11, wherein the support portion comprises an aperture, and shape change material on the aperture is arranged to shrink during the activation to laterally bend the tag (1) out of the surface (20).

13. The product of claim 11 or 12, wherein the shape change causes at least a portion of the antenna structure to elevate from the surface (20) or from a conducting surface of the identification tag (1).

14. The product of claim 11, 12 or 13, wherein the shape change material is arranged such that the activation causes at least a portion of the antenna structure (6) to approach the surface (20).

## Patentansprüche

1. Radiofrequenz-Identifikationsetikett (1) für Störflächen mit einem Transponder, wobei der Transponder (4) mindestens eine Antennenstruktur (6) und eine mit der Antennenstruktur (6) gekoppelte integrierte Schaltung (5) umfasst, wobei das Etikett (1) einen Aktivierungsabschnitt (2) umfasst,
**dadurch gekennzeichnet, dass** der Aktivierungsabschnitt (2) zumindest teilweise aus einem Formänderungsmaterial besteht, das so aktiviert werden kann, dass es eine Formänderung erfährt, um eine geänderte Ausrichtung zumindest eines Abschnitts des Etiketts (1), das die Antennenstruktur (6) umfasst, zu bewirken.

2. Identifikationsetikett nach Anspruch 1, wobei der Aktivierungsabschnitt mindestens zwei angebrachte Unterabschnitte mit verschiedenen thermischen Expansionskoeffizienten umfasst und der Aktivierungsabschnitt (2) durch Ändern der Temperatur biegbar ist.

3. Identifikationsetikett nach Anspruch 1 oder 2, wobei der Aktivierungsabschnitt (2) ein warmschrumpfbares Material umfasst.

4. Identifikationsetikett nach Anspruch 3, wobei zumindest der Aktivierungsabschnitt (2) einen warmschrumpfbaren Kunststofffilm umfasst.

5. Identifikationsetikett nach einem der vorstehenden Ansprüche, wobei das Formänderungsmaterial auf den mindestens einen Abschnitt des Transponders (4) laminiert oder geklebt ist.

6. Identifikationsetikett nach einem der vorstehenden Ansprüche, wobei das Formänderungsmaterial in einem Trägerabschnitt, der den Transponder trägt, eingebracht oder auf diesem hinzugefügt ist.

7. Identifikationsetikett nach Anspruch 1, wobei das Identifikationsetikett (1) mindestens zwei Oberflächen umfasst, die jeweils eine Antennenstruktur (6) oder einen Teil der Antennenstruktur (6) umfassen, und
der Abstand zwischen den Oberflächen so angeordnet ist, dass er in Reaktion auf die Aktivierung des Formänderungsmaterials größer wird, um den Leseabstand zu erhöhen.

8. Identifikationsetikett nach einem der vorstehenden Ansprüche, wobei das Formänderungsmaterial derart angeordnet ist, dass die Aktivierung bewirkt, dass sich zumindest ein Abschnitt des Aktivierungsabschnitts (2) krümmt und die Formantennenstruktur (6) gedreht oder gewendelt wird.

9. Verfahren zum Aufbringen des Radiofrequenz-Identifikationsetiketts nach einem der vorstehenden Ansprüche, wobei das Formänderungsmaterial aktiviert wird, um die Formänderung zu erfahren und das Identifikationsetikett (1) zu aktivieren oder deaktivieren.

10. Verfahren zur Herstellung eines Radiofrequenz-Identifikationsetiketts (1) für Störflächen, umfassend:
Bereitstellen eines Eingabematerials, umfassend ein Substrat (3) und eine Antennenstruktur (6) auf dem Substrat (3),
Anbringen einer integrierten Schaltung (5) auf einem Kontaktbereich der Antennenstruktur (6), und
Hinzufügen eines Formänderungsmaterials auf einem Aktivierungsabschnitt (2) des Etiketts (1), wobei das Formänderungsmaterial aktiviert werden kann, um eine Formänderung von im Wesentlichen dauerhafter Art zu erfahren, um eine veränderte Ausrichtung zumindest eines Abschnitts des Etiketts, das die Antennenstruktur (6) umfasst, zu bewirken.

11. Produkt, umfassend ein Radiofrequenz-Identifikationsetikett gemäß den Ansprüchen 1 - 8, wobei das Produkt eine Störfläche (20) umfasst und wobei das Etikett (1) auf der Oberfläche (20) angeordnet ist.

12. Produkt nach Anspruch 11, wobei der Trägerabschnitt eine Öffnung umfasst und das Formänderungsmaterial auf der Öffnung so angeordnet ist, dass es während der Aktivierung schrumpft, um das Etikett (1) seitlich aus der Oberfläche (20) zu biegen.

13. Produkt nach Anspruch 11 oder 12, wobei die Formänderung bewirkt, dass sich zumindest ein Abschnitt der Antennenstruktur von der Oberfläche (20) oder von einer leitfähigen Oberfläche des Identifikationsetiketts (1) emporhebt.

14. Produkt nach Anspruch 11, 12 oder 13, wobei das Formänderungsmaterial derart angeordnet ist, dass die Aktivierung bewirkt, dass sich zumindest ein Abschnitt der Antennenstruktur (6) der Oberfläche (20) annähert.

## Revendications

1. Étiquette d'identification par radiofréquence (1) pour surfaces interférentes avec un transpondeur, dans laquelle le transpondeur (4) comprend au moins une structure d'antenne (6) et un circuit intégré (5) couplé à la structure d'antenne (6), selon laquelle l'étiquette (1) comprend une partie d'activation (2),
**caractérisée en ce que** la partie d'activation (2) est constituée au moins en partie d'un matériau à changement de forme qui peut être activé pour subir un changement de forme afin de provoquer un changement d'orientation d'au moins une partie de l'étiquette (1) comprenant la structure d'antenne (6).

2. Étiquette d'identification selon la revendication 1, dans laquelle la partie d'activation comprend au moins deux sous-parties jointes ayant différents coefficients de dilatation thermique, et la partie d'activation (2) est pliable par une variation de température.

3. Étiquette d'identification selon la revendication 1 ou 2, dans laquelle la partie d'activation (2) comprend un matériau thermorétractable.

4. Étiquette d'identification selon la revendication 3, dans laquelle au moins la partie d'activation (2) comprend un film plastique thermorétractable.

5. Étiquette d'identification selon l'une quelconque des revendications précédentes, dans laquelle le matériau à changement de forme est plastifié ou collé sur au moins la partie du transpondeur (4).

6. Étiquette d'identification selon l'une quelconque des revendications précédentes, dans laquelle le matériau à changement de forme est inclus ou ajouté sur une partie de support supportant le transpondeur.

7. Étiquette d'identification selon la revendication 1, dans laquelle l'étiquette d'identification (1) comprend au moins deux surfaces comprenant chacune une structure d'antenne (6) ou une partie de la structure d'antenne (6), et la distance entre les surfaces est agencée de façon à augmenter en réponse à l'activation du matériau à changement de forme afin d'augmenter la surface de lecture.

8. Étiquette d'identification selon l'une quelconque des revendications précédentes, dans laquelle le matériau à changement de forme est agencé de manière à ce que l'activation engendre une courbure d'au moins une partie de la partie d'activation (2) et une rotation ou une mise en spirale de la forme de structure d'antenne (6).

9. Procédé d'utilisation de l'étiquette d'identification par radiofréquence selon l'une quelconque des revendications précédentes, dans lequel le matériau à changement de forme est activé pour subir un changement de forme et activer ou désactiver l'étiquette d'identification (1).

10. Procédé de fabrication d'une étiquette d'identification par radiofréquence (1) pour surfaces interférentes, comprenant :
la fourniture d'un matériau de départ comprenant un substrat (3) et une structure d'antenne (6) sur le substrat (3),
la fixation d'un circuit intégré (5) sur une surface de coussinet de la structure d'antenne (6), et
l'ajout d'un matériau à changement de forme sur une partie d'activation (2) ; de l'étiquette (1), dans lequel le matériau à changement de forme peut être activé pour subir un changement de forme de nature sensiblement permanente afin d'engendrer un changement d'orientation d'au moins une partie de l'étiquette comprenant la structure d'antenne (6).

11. Produit comprenant une étiquette d'identification par radiofréquence selon l'une des revendications 1 à 8, dans lequel le produit comprend une surface interférente (20) et l'étiquette (1) est agencée sur la surface (20).

12. Produit selon la revendication 11, dans lequel la partie de support comprend une ouverture, et le matériau à changement de forme sur l'ouverture est agencé de façon à se rétracter pendant l'activation pour plier latéralement l'étiquette (1) à l'extérieur de la surface (20).

13. Produit selon la revendication 11 ou 12, dans lequel le changement de forme provoque un soulèvement d'au moins une partie de la structure d'antenne par rapport à la surface (20) ou à une surface conductrice de l'étiquette d'identification (1).

14. Produit selon la revendication 11, 12 ou 13, dans lequel le matériau à changement de forme est agencé de telle manière que l'activation engendre un rapprochement d'au moins une partie de la structure d'antenne (3) vis-à-vis de la surface (20).
